# EUROPEAN PATENT APPLICATION

(11) **EP 4 850 871 A1**
(43) Date of publication of application: **09.12.2026**
(21) Application number: 26180877.8
(22) Date of filing: 26.05.2026
(51) Int. Cl.: B25J 9/16

(54) **ROBOT SYSTEM**

(30) Priority: 02.06.2025 JP 2025091702
(71) Applicant: Nachi-Fujikoshi Corp., Tokyo 105-0021 (JP)
(72) Inventor: FUJISAWA, Tatsuro, Toyama, 9308511 (JP)
(74) Representative: Plougmann Vingtoft a/s

(57) **Abstract**

A robot system includes a robot with a robot arm installed on an installation surface, a sensor, and a controller. The sensor senses a monitoring range in a plane non-parallel to the installation surface and measures distances to objects. The controller is programmed to define a projection plane parallel to the installation surface to recognize spatial relationships. Subsequent to starting robot operation, a monitoring process is recursively performed. This process includes updating sensed circumstances, projecting points representing detected objects onto the projection plane based on sensor installation angle information, and projecting a geometric shape representing the current robot arm position onto the same plane. When a distance between the projected point and the projected geometric shape is equal to or less than a threshold, the controller restricts robot operation.

## Description

### RELATED APPLICATIONS

This application claims priority to Japanese Patent Application No. JP 2025-091702, filed on June 2, 2025, the entire content of which is incorporated herein by reference.

### BACKGROUND OF THE INVENTION

### 1. Field of the Invention

The present invention relates to a robot system equipped with a function to control the robot to avoid contact with humans.

### 2. Description of the Related Art

Conventionally, collaborative robots refer in general to robots that work with human workers in shared workspaces without using safety fences for protecting the human workers. The controller of the collaborative robot is equipped with a function to detect an external force exerted on the robot upon a collision with a worker or the like during a collaborative operation and to safely stop the robot. For example, Japanese Unexamined Patent Application Publication No. 2015-199174 has disclosed a human-cooperative industrial robot that includes a contact-force detector, which detects a contact force exerted on the robot when the robot comes into contact with a worker, and a contact-force monitor, which, in response to a detection of contact force exceeding a predetermined threshold value, either stops the operation of the robot or moves the robot in a direction that reduces the contact force.

Furthermore, a robot system has been developed with a safety laser scanner, which enables the robot to operate without the need to use the safety fences. In general, the safety laser scanner functions as a safety device that detects an entry of a worker into a preset detection area. The conventional robot system including the safety laser scanner can stop the robot when the controller of the robot receives a signal from the safety laser scanner that alerts an entry of a human into the detection area. With the safety laser scanner used in the way, the robot can be stopped safely to avoid contact between the worker and the robot.

### SUMMARY OF THE INVENTION

However, the conventional use of the safety laser scanner to effectively avoid contact with a human worker requires the execution of preparatory tasks for comprehensively evaluating associated risks and establishing detection areas that should be defined in view of the operations of the robot. Any change to the operation of the robot necessitates redoing of these preparatory tasks, resulting in increase in workload for preparing the robot to operate.

In addition, the conventional use of the safety laser scanner to effectively avoid contact with a human worker further requires establishing a detection area that covers all areas and locations the robot arm may possibly move in. The detection area is established so that when a human enters the detection area, the robot will be stopped even if the human and the robot are working far away from each other, causing frequent pauses of the robot and thus reducing the robot's productivity.

Furthermore, there may be an object such as a workbench set up within the detection area whose height is higher than the installation level of the safety laser scanner. If the safety laser scanner is installed so that the laser beam is emitted at the installation level only in the horizontal direction as emitted by conventional robots, the laser beam is reflected by the workbench unable to reach a worker behind the workbench. This makes it impossible to detect a person located behind the workbench.

The present invention was made in view of the above-mentioned issues. It is an object of the present invention to provide a robot system that can effectively avoid contact between a human worker and a robot without performing complicated preparation tasks every time a new workflow is set to the robot, and thus can flexibly adapt to new operation conditions imposed in the installation environment.

A robot system includes a robot having a robot arm and installed on a robot installation surface, a sensor, and a controller. The sensor is operable to sense a monitoring range extending in a specific plane that has an installation angle non-parallel to the robot installation surface, and is operable to measure a distance to an object that is present in the monitoring range. The controller, comprising at least one processor and at least one memory, is programmed to define a projection plane parallel to the robot installation surface for recognizing a spatial relationship between the object and the robot arm. Subsequent to starting the operation of the robot, the at least one processor recursively performs a monitoring process. The monitoring process includes operating the sensor to sense the monitoring range at predetermined intervals to recursively update a sensed circumstance surrounding the robot, wherein a current update of the sensed circumstance includes a location of the object detected in the monitoring range. In the monitoring process, the at least one processor also projects a point representative of the object included in the current update of the sensed circumstance onto the projection plane using installation angle information indicating the installation angle. Furthermore, the at least one processor calculates a current arm position of the robot, projects a geometric shape representative of the calculated current arm position onto the projection plane, and determines if a distance in the projection plane between the point projected on the projection plane and the geometric shape projected on the projection plane is equal to or less than a threshold value. In response to a determination that the determined distance is equal to or less than the threshold value, the at least one processor controls the robot to restrict the operation of the robot.

In the robot system, the at least one processor is further programmed to operate the sensor to sense the monitoring range prior to the operation of the robot to derive an outset of the sensed circumstance surrounding the robot. The monitoring process further involves determining whether or not there is a change between the current update of the sensed circumstance and the outset of the sensed circumstance. In response to a determination that there is a change between the current update of the sensed circumstance and the outset of the sensed circumstance, the at least one processor performs the process of projecting the point representative of the object onto the projection plane, the process of calculating the current arm position and projecting the geometric shape, and the process of determining whether or not the distance is equal to or less than the threshold value.

The at least one processor is further programmed to implement a process of lifting restriction on the operation of the robot in response to a determination that throughout the entire monitoring range, there is no change detected between the current update of the sensed circumstance and the outset of the sensed circumstance or a determination that the distance in the projection plane between the point projected on the projection plane and the geometric shape projected on the projection plane is greater than the threshold value.

The robot system further includes an operating device operable by a user to control movements of the robot. The at least one processor is programmed to implement a process of determining whether or not there is a change between the current update of the sensed circumstance and the outset of the sensed circumstance obtained during a teaching process of the robot. In response to a determination that a change is detected between them, the at least one processor notifies the operating device that the robot is passing through the monitoring range at a timing of the change, and waits to receive a request as to whether or not to cancel the monitoring process at the timing of the change.

### BRIEF DESCRIPTION OF THE DRAWINGS

FIG. 1 is a view showing an overall configuration of a robot system according to an embodiment of the present invention.
FIG. 2 is a view showing an exemplary manner in which a sensor is installed that uses an installation angle adjustment mechanism of FIG. 1.
FIG. 3 is a block diagram showing a functional configuration of the robot system of FIG. 1.
FIG. 4 is a flow chart showing an exemplary outset-circumstance storing process executed by the controller in FIG. 1.
FIG. 5 is a schematic view explaining the outset-circumstance storing process shown in FIG. 4.
FIG. 6 is a flow chart showing an exemplary monitoring process executed by the controller of FIG. 1.
FIG. 7 is a view schematically showing an installation position of the sensor in a robot coordinate system.
FIG. 8 is a view schematically showing installation angles of the sensor in a sensor coordinate system.
FIG. 9 is a schematic view explaining the process of step S17 shown in FIG. 6.
FIG. 10 is a flow chart showing an exemplary teaching process executed by the controller in FIG. 1.

### DETAILED DESCRIPTION OF THE PREFERRED EMBODIMENTS

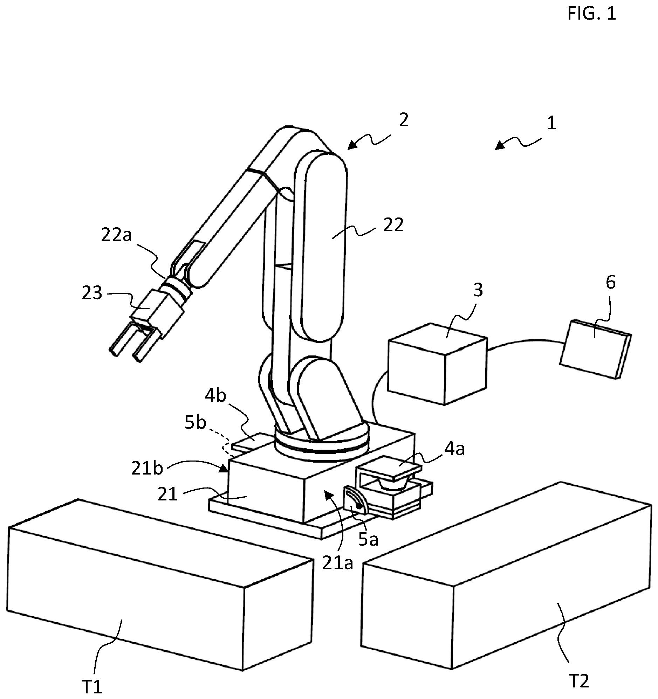

Hereinafter, embodiments of the present invention will be described with reference to the accompanying drawings. FIG. 1 is a view showing an overall configuration of a robot system according to an embodiment of the present invention. As shown in FIG. 1, a robot system 1 includes a robot 2, a controller 3 for controlling operations of the robot 2, and sensors 4a and 4b for measuring a distance to an object from the position of the robot 2. Examples of the object include a human. The robot system 1 may include installation angle adjustment mechanisms 5a and 5b for adjusting installation angles of the respective sensors 4a and 4b. Also, the robot system 1 may further include an operating device 6 operable by a user to control the movements of the robot 2. In an example shown in FIG. 1, two workbenches T1 and T2 each depicted in a substantially rectangular parallelepiped shape are installed in front of and to the left of the robot 2. The workbenches T1 and T2 may be tables on which a workpiece (not shown) or the like is placed.

The robot 2 is a vertical articulated robot with six joints, for example. The robot 2 includes a base 21 installed on a robot installation surface such as a floor, a robot arm 22 that is joined to the base 21, and a tool 23 that is attached to a distal end 22a of the arm 22. The arm 22 is configured with a plurality of joints and a plurality of links movable by link mechanisms. Each joint joins a pair of adjacent links, and is driven by a power mechanism (motor, speed reducer, bearing, gear, etc.) to rotate the pair of links relative to each other. The tool 23 is in the form of a robot hand that can grip a workpiece for example. The embodiments of the present invention are implementable with any number of joints or any types of the tool 23 of the robot 2.

The controller 3 may be stored inside the robot 2 or may be installed separately from the robot 2. In addition, the controller 3 may be configured with one or more controllers. When it is configured with more than one controller, these controllers are operably connected to each other. In the example shown in FIG. 1, the controller 3 is installed separately from the robot 2, and the controller 3 is formed of one controller.

The sensors 4a and 4b are each operable to sense a monitoring range extending along a specific plane that has an installation angle non-parallel to the robot installation surface, and are each operable to measure a distance to an object that is present in the monitoring range. The sensors 4a and 4b are, for example, safety devices each realized in the form of a safety laser scanner. The sensors 4a and 4b each project a laser beam light by a projector, each receive by a light receiver a light reflected at the object, and each measure a time interval from the irradiation of the laser beam to the receipt thereof to calculate a distance to the position from the position of the sensor. The sensors 4a and 4b can detect the presences of surrounding objects within a specific plane set by the installation angle adjustment mechanisms 5a and 5b. The sensors 4a and 4b perform detection of surrounding objects by scanning respective fan-shaped areas while incrementally changing the irradiation angle to calculate distances to the detected objects. That is, each of the sensors 4a and 4b has its own monitoring range. The monitoring range is segmented at angular intervals into the fan-shaped areas, and each of the sensors 4a and 4b is operable to monitor its own monitoring range by sensing one fan-shaped area after another to collectively sense a circumstance surrounding the robot 2. The sensed circumstance is thus formed with a collection of continuous segment views captured at the angular intervals by the sensors 4a and 4b. The irradiation angles of the sensors 4a and 4b, which each over a respective fan-shape area, are each defined as a rotation angle around a vertical axis of the sensors 4a and 4b, i.e., yaw angles.

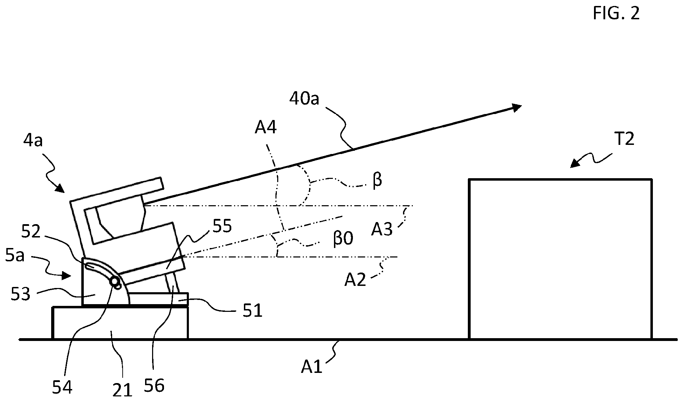

The sensors 4a and 4b are attached to installation angle adjustment mechanisms 5a and 5b, respectively. The installation angle adjustment mechanisms 5a and 5b are fixed to the base 21 of the robot 2. The installation angle adjustment mechanisms 5a and 5b each include, for example, a mechanism for adjusting an installation angle at which a rotation angle around a horizontal axis of each of the sensors 4a and 4b, i.e., a pitch angle (vertical tilt of the sensors 4a and 4b). Details of the installation angle adjustment mechanisms 5a and 5b will be described later with reference to FIG. 2.

Although FIG. 1 shows two sensors, i.e., the sensors 4a and 4b, there may be only one sensor or three or more sensors provided with the robot 2. The sensors 4a and 4b are placed on the opposite side faces 21a and 21b of the base 21 of the robot 2, for example. It should be noted that the embodiments of the present invention are implementable with the sensors 4a and 4b installed at any locations. Also, the sensors 4a and 4b do not have to be formed with the safety laser scanners and may be formed with sensors that emit radio waves such as a millimeter wave radar, as long as the distance to an object can be measured.

The operating device 6 may be a terminal, such as a teaching pendant, that can be carried by the user. The operating device 6 is used to teach the robot 2 movements necessary to perform a required workflow and to control the robot 2 to play back the taught movements. The robot 2 operates in a teaching mode or in a playback mode according to instructions from the operating device 6. The operating device 6 may be of a type configured with physical buttons operated to display information on a non-touch screen display or may be of touch-screen types that use a general-purpose tablet terminal with a touch screen display or a mobile terminal such as a smartphone having a touch screen display. The operating device 6 shown in FIG. 1 is of a touch-screen type. It should be noted that the embodiments of the present invention are implementable with any types of the operating device 6.

The controller 3 is operably connected to the robot 2, the sensors 4a and 4b and the operating device 6. The controller 3 may be connected to these devices wirelessly or via a physical communication cable.

FIG. 2 is a view showing an exemplary manner in which a sensor is installed that uses the installation angle adjustment mechanism of FIG. 1. FIG. 2 is a view showing a part of the robot system 1 as seen from the front. FIG. 2 shows only a part of the base 21 of the robot 2, the sensor 4a, the installation angle adjustment mechanism 5a, and the workbench T2. Since the installation of the sensor 4b using the installation angle adjustment mechanism 5b is the same as the installation of the sensor 4a using the installation angle adjustment mechanism 5a, the description thereof is omitted.

In the example of FIG. 2, the laser beam of the sensor 4a emitted parallel, as seen from the horizontal direction, to the robot installation surface A1 on which the robot 2 is installed is reflected by the workbench T2 and cannot reach a person behind the workbench T2. Thus, the sensor 4a so oriented cannot detect a person located behind the workbench T2 (on the right side in FIG. 2). Therefore, in the present embodiment, the sensor 4a is installed so that an installation angle may be adjusted to a non-parallel angle with respect to the robot installation surface A1. In other words, the sensor 4a is installed so that the irradiation direction 40a of the laser beam is aimed upward. As a result, the laser beam of the sensor 4a passes above the top of the workbench T2, and thus detection of a person standing behind the workbench T2 becomes possible. Double-dotted chain lines A2 and A3 in FIG. 2 represent planes parallel to the robot installation surface A1. A double-dotted chain line A4 in FIG. 2 represents a plane parallel to the irradiation direction 40a of the laser beam of the sensor 4a as seen from the horizontal direction.

The installation angle adjustment mechanism 5a includes a mounting base 51 attached to the base 21 of the robot 2, a pair of side plates 53 each having an arc-shaped guide slots 52 and standing vertically at both side surfaces of the mounting base 51, and a rotary base 55 that has a pair of sliding members 54 slidable along the guide slots 52 and is rotatable relative to the mounting base 51. Each sliding member 54 includes of a screw and a washer. The sensor 4a is fixed by a fastening member such as a screw in alignment with the face of the rotary base 55. A rotation angle β0 of the rotary base 55 relative to the mounting base 51 is substantially equal to a rotation angle of the sensor 4a around the horizontal axis, i.e., a pitch angle β of the sensor 4a. A user moves the sliding members 54 to a desired pitch angle β and tightens the screws of the sliding members 54 to fix the position of the rotary base 55. The side plates 53 may be provided with a mark at a location corresponding to the rotation angle β0. Further, the installation angle adjustment mechanism 5a may include a support plate 56 that supports the rotary base 55. The installation angle adjustment mechanism 5a can perform an angle adjustment at multiple angular intervals if it has support plates 56 of a plurality of lengths or a support plate 56 with an adjustable length.

Note that Fig. 2 shows the installation angle adjustment mechanism 5a, which is just one example of the present invention. The installation angle adjustment mechanisms 5a and 5b may be of any structure as long as the pitch angle β of the sensors 4a and 4b is adjustable. Further, the installation angle adjustment mechanisms 5a and 5b may be configured to allow the pitch angle β to be set at a plurality of discrete angles, or may be configured to allow the pitch angle β to be changed in a continuous and indiscrete manner. Furthermore, the installation angle adjustment mechanisms 5a and 5b may be configured with any mechanisms as long as the mechanisms can set the sensors 4a and 4b at any desired pitch angle β relative to the robot installation surface A1. The present invention does not require the robot system 1 to have the installation angle adjustment mechanisms 5a and 5b.

In the above description, the installation angle adjustment mechanisms 5a and 5b are configured to adjust the pitch angle β of the respective sensors 4a and 4b. However, they may be configured to adjust a roll angle (lateral tilt of the sensors 4a and 4b), which is a rotation angle around a front-back axis or may be configured to adjust a yaw angle (front orientation of the sensors 4a and 4b), which is a rotation angle around the vertical axis. Further, the installation angle adjustment mechanisms 5a and 5b may be configured to adjust two or more angles selected from the pitch angle β, the roll angle, and the yaw angle of the sensors 4a and 4b.

Hereinafter, non-parallel installation angles of the sensors 4a and 4b relative to the robot installation surface A1 of the robot 2 are defined by "installation angle information." The installation angle information includes a value representative of one or more installation angles selected from the pitch angle β, the roll angle, and the yaw angle of the sensors 4a and 4b. The installation angle may take a different value or the same value for the respective sensors 4a and 4b. The controller 3 distinguishes the installation angle information for the respective sensors 4a and 4b and executes the processes described later.

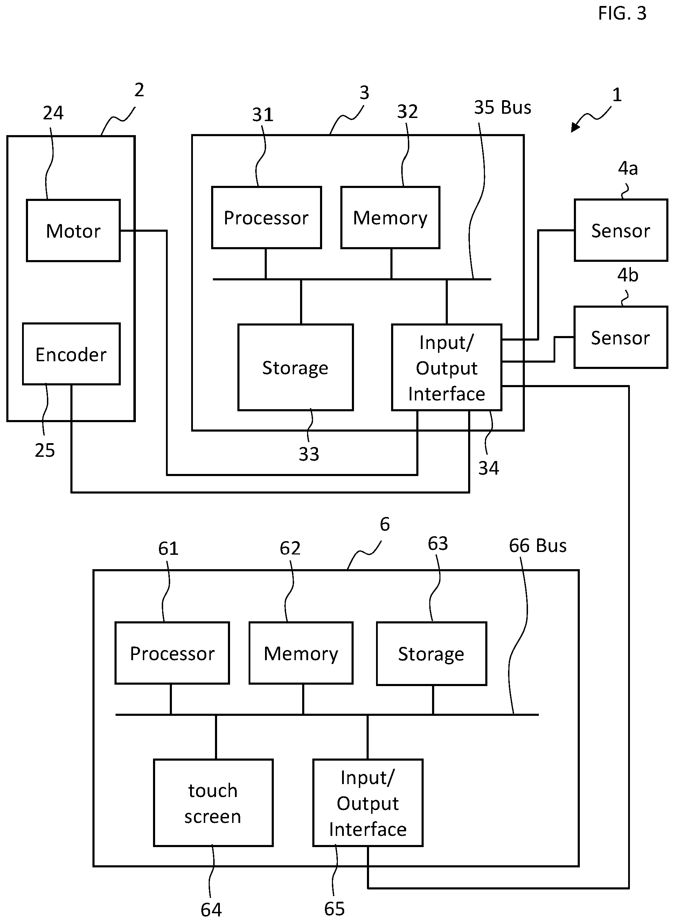

FIG. 3 is a block diagram showing a functional configuration of the robot system in FIG. 1. The robot 2 includes, at each of the joints thereof, a motor 24 that rotates according to instructions from the controller 3, and an encoder 25 that detects a rotational angle of the motor 24 and outputs to the controller 3 an axial angle of each joint axis.

The controller 3 has a processor 31, a memory 32, a storage 33, and an input/output interface 34 that are connected to each other via a bus 35. The controller 3 is programmed to control the operation of the robot 2. The processor 31 may be formed with a single processor or may be formed with a collection of processors. So may the memory 32. The processor 31 is programmed to implement processes described later. The processor 31 is formed with a CPU (Central Processing Unit) or the like and reads out a computer program stored in advance in the storage 33, deploys the read-out computer program in the memory 32 and sequentially executes a plurality of commands of the deployed computer program. The memory 32 is formed with a volatile memory such as a semiconductor memory, and takes the form of a storage device, to or from which the processor 31 can directly read and write data. The storage 33 is formed with a non-transitory computer-readable storage medium such as a hard disk drive, solid state drive, or USB (Universal Serial Bus) memory, and stores computer programs and data therein. The input/output interface 34 functions as an external connection device used for inputting and outputting signals to and from the robot 2, the sensors 4a and 4b, the operating device 6 and the like.

The operating device 6 includes a processor 61, a memory 62, a storage 63, a touch screen 64, and an input/output interface 65 that are connected to each other via a bus 66. Since the processor 61, the memory 62, and the storage 63 are configured similarly to the processor 31, the memory 32, and the storage 33, respectively, descriptions thereof are omitted. The touch screen 64 functions as an input device integrated with a display device such as a liquid crystal display and displays data as well as receives data inputted through touch operations. The input/output interface 65 functions as an external connection device used for inputting and outputting signals to and from the controller 3 and other devices. Although not shown in FIG. 3, the operating device 6 also includes an emergency stop switch that is operated to stop the robot 2 in an emergency, and an enabling switch for enabling commands to the robot 2.

The functions of the controller 3 and the operating device 6 may be realized at least in part by a logic circuit or an analog circuit. Also, the controller 3 and the operating device 6 may execute various programs using an electronic circuit such as an FPGA (Field Programmable Gate Array). The controller 3 and the operating device 6 may further include devices, such as a wireless communication device and a speaker not shown in FIG. 3.

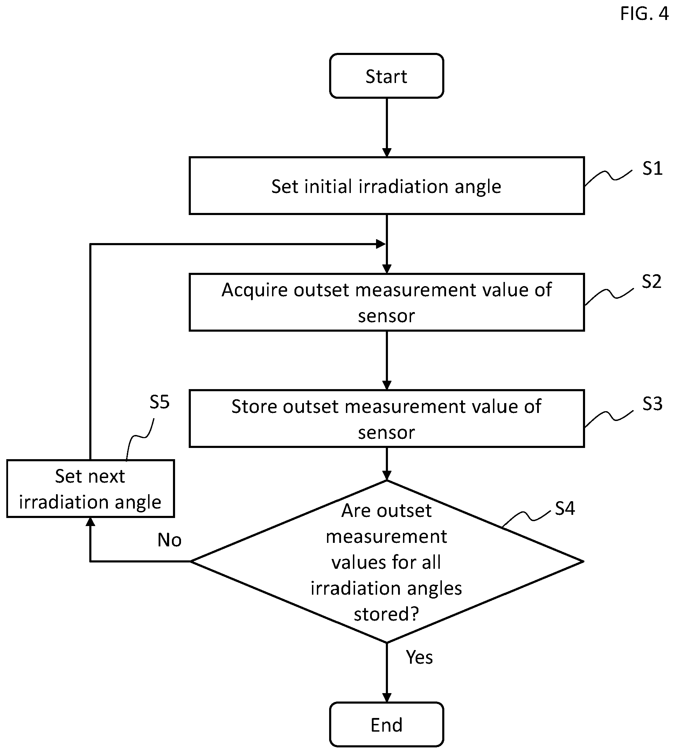

FIG. 4 is a flow chart showing an exemplary process for storing outset measurement values executed by the controller in FIG. 1. The process for storing the outset measurement values is performed by the controller 3 before the robot starts its operation. outset measurement values include a distance to an object, if found in the monitoring rage, measured at each of the irradiation angles of laser light of the sensor 4a (or 4b). The irradiation angle of the sensor 4a (or 4b) is an angle that indicates a direction in which a laser beam of the sensor 4a (or 4b) is irradiated. The laser beam direction is changed incrementally at an angular interval from one irradiation angle to next to sense continuous fan-shaped areas within a specific plane set by the installation angle adjustment mechanism 5a (or 5b). The controller 3 executes the process shown in FIG. 4 for each of the sensors 4a and 4b. That is, the controller 3 separately operates the sensors 4a and 4b to sense one monitoring range by the sensor 4a and then another monitoring range by the sensor 4b to obtain the outset measurement values, prior to the operation of the robot 2.

As shown in FIG. 4, the processor 31 of the controller 3 sets an initial irradiation angle for the sensor 4a (step S1). Next, the processor 31 acquires a primary outset measurement value of the sensor 4a (step S2) resulting from sensing at the initial irradiation angle and stores the primary outset measurement value of the sensor 4a in the storage 33 (step S3). Then, the processor 31 checks whether or not the primary outset measurement value has been stored for the respective irradiation angles for the sensor 4a (step S4). If the outset primary measurement value has not been stored for the respective irradiation angles ('No' in step S4), the processor 31 sets a next irradiation angle for the sensor 4a (step S5) and repeats the loop of steps S2, S3 and S4. On the other hand, if the primary outset measurement value has been stored for the respective irradiation angles for the sensor 4a ('Yes' in step S4), the processor 31 starts step S1 to set an initial irradiation angle for the sensor 4b and repeats the loop of steps S2, S3, S4 and S5 for the sensor 4b to recursively sense at the respective irradiation angles one after another until a judgement in step S4 becomes 'Yes'. The processor 31 terminates the process shown in FIG. 4 when the determination in step S4 becomes 'Yes' for both sensors 4a and 4b, indicating that both sensors 4a and 4b have finished sensing at all of the irradiation angles. At the completion of sensing at all of the irradiation angles, the processor 31 has a set of primary out measurement values resulting from sensing at the respective irradiation angles for the sensor 4a and another set for the sensor 4b. The processor 31 then stores these two sets of primary outset measurement values as the outset measurement values for the sensors 4a and 4b. Thus, in the present embodiment, the monitoring rage of each of the sensors 4a and 4b is segmented into fan-shaped areas at an angular interval equal to a difference between one irradiation angle and the next irradiation angle. Each of the sensors 4a and 4b senses the fan-shaped areas incrementally from one to next. A primary outset measurement value is derived as a result of sensing one fan-shaped area, which represents a segmental view of the one fan-shaped area. These primary outset measurement values from the sensor 4a and the primary outset measurement values from the sensor 4b are combined to derive the outset measurement values, which are a collection of the segmental views of the fan-shaped areas and represent a panoramic view of the circumstance surrounding the robot 2.

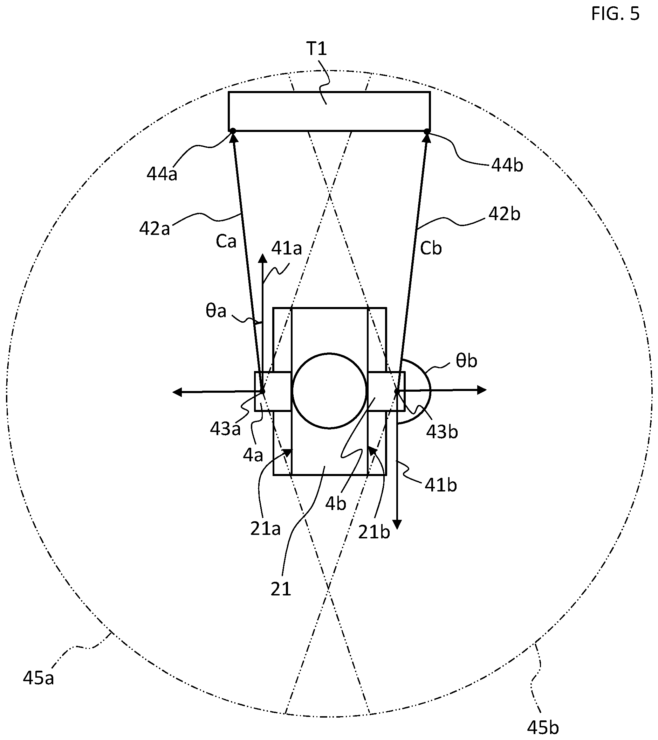

FIG. 5 is a schematic view explaining the process of deriving the outset measurement values shown in FIG. 4. FIG. 5 is a view showing a part of the robot system 1 as seen from vertically above. FIG. 5 only shows the base 21 and the sensors 4a and 4b of the robot 2, and the workbench T1. The maximum irradiation angle for sensing by each of the sensors 4a and 4b is 270°, for example, and, since the sensors 4a and 4b are installed on the opposite side faces 21a and 21b of the base 21, the sensors 4a and 4b can collectively monitor almost the entire angles or the entire circumstance surrounding the robot 2. Even where the sensors 4a and 4b are installed distant from the robot 2, the sensors 4a and 4b positioned opposite to each other with respect to the robot 2 can monitor almost the entire angles surrounding the robot 2.

The irradiation angles of the sensors 4a and 4b are shown, respectively, as angles θa and θb measured counterclockwise from respective reference directions (for example, the right side of the sensors 4a and 4b) 41a and 41b as seen from a vertical direction through respective laser light irradiation directions 42a and 42b as seen from the vertical direction. Monitoring ranges 45a and 45b of the respective sensors 4a and 4b are defined by monitoring distances (within the maximum irradiation distances of the sensors 4a and 4b) and monitoring angle ranges (within the maximum irradiation angles of the sensors 4a and 4b). Measured values Ca and Cb of the sensors 4a and 4b correspond to distances from respective base points 43a and 43b of the laser lights to points 44a and 44b at which the laser lights are reflected by the object. The measured values Ca and Cb of the sensors 4a and 4b shown in FIG. 5 correspond to the distances to the workbench T1. When there is no object present in the monitoring distance, the measured values Ca and Cb of the sensors 4a and 4b become equal to the monitoring distances. Note that the monitoring ranges 45a and 45b extend also in vertical directions of the sensors 4a and 4b by predetermined ranges with the base points 43a and 43b of the laser lights of the sensors 4a and 4b taken as the centers.

Through the process in FIG. 4, the controller 3 stores the outset measurement values of the respective sensors 4a and 4b, resulting from sensing the initial circumstance surrounding the robot 2, before starting to control the operation of the robot 2. The processor 31 of the controller 3 stores the measured values Ca and Cb as coordinates in a polar coordinate system (Ca, θa) and (Cb, θb) in the storage 33, for example. The processor 31 uses the outset measurement values of the sensors 4a and 4b to determine whether or not there is a change between the outset circumstance and a current circumstance during a monitoring process described later. The processor 31 does not perform any correction on the initial measurement values of the sensors 4a and 4b based on the installation angle information of the sensors 4a and 4b. Although the process shown in FIG. 4 is performed every time there is a change in the circumstance surrounding the robot 2, since the controller 3 automatically performs the process, the user does not have to make any complicated preparations for acquiring the initial measurement values of the sensors 4a and 4b.

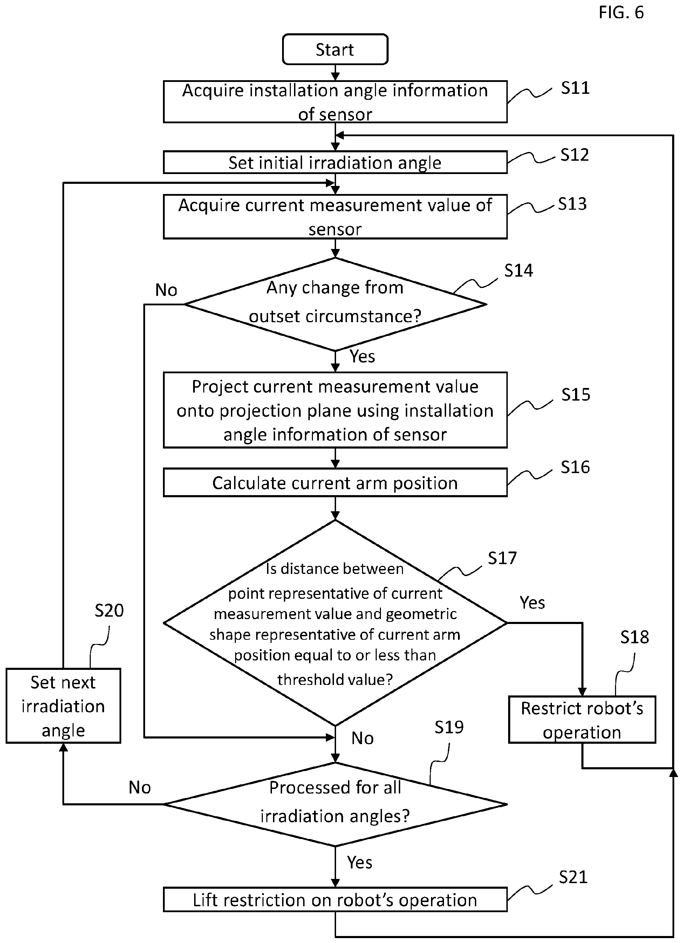

FIG. 6 is a flow chart showing an exemplary monitoring process executed by the controller in FIG. 1. The controller 3 executes the monitoring process shown in FIG. 6 at a regular processing interval during the operation of the robot 2. That is, subsequent to starting the operation of the robot 2, the controller 3 recursively performs the monitoring process at the regular processing interval. To execute the monitoring process shown in FIG. 6, the controller 3 stores in the storage 33 link parameters and profile information (such as dimensions of each part and weight) of the robot arm 22, as well as installation positions of the sensors 4a and 4b. The link parameters include a distance between the links, a link twist angle, and a link length, which are represented by DH parameters derived by the Denavit - Hartenberg convention (D-H convention). The installation positions of the sensors 4a and 4b are stored, for example, as coordinates in a robot coordinate system set on a mounting surface of the base 21 of the robot 2. The processor 31 of the controller 3 reads out data representative of the link parameters and robot profile information from the storage 33 and deploys the data in the memory 32 before executing the monitoring process shown in FIG. 6.

In the way the process shown in FIG. 4 is performed, the controller 3 performs the monitoring process with the sensor 4a, which incrementally senses at one irradiation angle after another to complete sensing of the monitoring range 45a and then with the sensor 4b, which similarly senses at one irradiation angle after another to complete sensing of the monitor range 45b to thereby complete sensing of the entire circumstance surrounding the robot 2. Thus, at the end of sensing by the sensors 4a and 4b, the controller 3 has one set of current primary measurement values resulting from sensing at the respective irradiation angles for the sensor 4a and another set for the sensor 4b. After the completion of the first round of sensing by the sensors 4a and 4b at the respective irradiation angles, the controller 3 performs a second round of sensing to update the current primary measurement values. Specifically, the controller 3 operates the sensors 4a and 4b to sense the monitoring ranges 45a and 45b incrementally at the respective irradiation angles to recursively update the current primary measurement values obtained at the first round of sensing. Thus, after the completion of the second round of sensing, the current primary measurement values obtained through the first round of sensing are replaced with new sets of current primary measurement values obtained at the second round of sending. An updated current primary measurement values may identify an object that newly enters in the monitoring range 45a and 45b, even if the current (prior to the update) primary measurement values do not identify any object in the monitoring ranges. Each time a current primary measurement value is measured at one irradiation angle, the controller 3 determines if there is any change between the current primary measurement value measured at said one irradiation angle and a corresponding primary outset measurement value in the outset measurement values obtained by the process shown in FIG. 4. The controller 3 repeatedly compares two corresponding segmental views throughout collections of continuous segmental views between the current primary measurement values and the primary outset measurement values to determine if there is any change between the current primary measurement values and the primary outset measurement values.

As shown in FIG. 6, the processor 31 of the controller 3 acquires the installation angle information of the sensor 4a (step S11). For example, the operating device 6 receives an input of the installation angle information from a user and transmits the installation angle information to the controller 3, and the controller 3 receives the installation angle information. Also, for example, when the installation angle adjustment mechanism 5a can adjust the installation angle to an angle selected from a plurality of angles, the controller 3 may prepare a table in advance that stores available installation angles for adjustment. The operating device 6 presents to the user options for available installation angles, receives a selection of the installation angle from the user, and transmits the selected one of the installation angles to the controller 3 The controller 3 receives the selected installation angle. Then, the controller 3 search the stored table to find a numerical value corresponding to the selected installation angle. Note that the processor 31 may acquire the installation position of the sensor 4a along with the installation angle in step S11.

Next, the processor 31 sets an initial irradiation angle for the sensor 4a (step S12). As explained, the irradiation angle of the sensor 4a indicating a direction in which the laser beam of the sensor 4a is irradiated and increments at an angular interval to sense the fan shaped areas within a specific plane set by the installation angle adjustment mechanism 5a. Next, the processor 31 acquires a current primary measurement value of the sensor 4a (step S13) resulting from sensing at the initial irradiation angle and determines whether or not any new object enters the monitoring range 45a (step S14). Specifically, the processor 31 determines whether or not there is a change between the current primary measurement value resulting from sensing by the sensor 4a at the initial irradiation angle and a corresponding primary outset measurement value in the outset measurement values of the sensor 4a resulting from sensing at the same irradiation angle. If there is a change between the current primary measurement value and the corresponding primary outset measurement value ("Yes" in step S14), the processor 31 proceeds to step S15. If there is no change between them ("No" in step S14), the processor 31 proceeds to step S19. A stationary object such as workbench T1 may be found in both the primary outset measurement value and in the current primary measurement value. However, the stationary object is not recognized as a change. Thus, a stationary object is not a detectable object for the purpose of the present invention and does not cause the processor 31 to stop the operation of the robot 2 even if the stational object is placed close to the sensors 4a and 4b.

In response to a determination that there is a change between the current primary measurement value and the primary outset measurement value, meaning that an object has entered the monitoring range, the processor 31, using the installation angle information , projects a point representative of the object included in the current primary measurement value onto a two-dimensional projection plane parallel to the robot installation surface A1 (step S15).

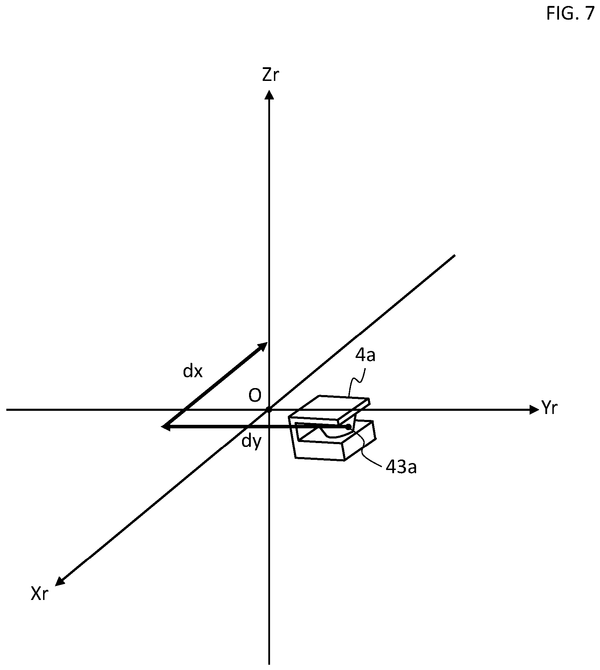

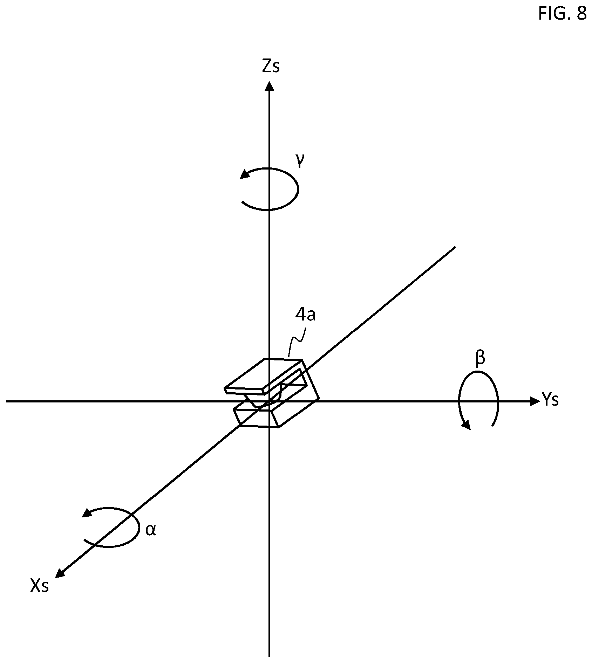

FIG. 7 is a view schematically showing the installation position of the sensor in the robot coordinate system. FIG. 8 is a view schematically showing installation angles of the sensor in a sensor coordinate system. Conversion equations for projecting the current measurement value of the sensor 4a onto the projection plane will be described with reference to FIGS. 7 and 8.

In the robot coordinate system of FIG. 7, the Xr-axis is the front-rear direction of the robot 2, the Yr-axis is the left-right direction of the robot 2, and the Zr-axis is the up-down direction of the robot 2. In FIG. 7, dx and dy are offset values of the X-coordinate and the Y-coordinate, respectively, used to move the base point 43a of the laser beam of the sensor 4a to the origin O of the robot coordinate system. Since the projection plane is the XY plane of the robot coordinate system, an offset value of the Z-coordinate is unnecessary. The values dx and dy indicate the installation position of the sensor 4a stored in advance into the memory 32.

The sensor coordinate system of FIG. 8 is set on the mounting surface of the sensor 4a, in which the Xs-axis is the front-rear direction of the sensor 4a, the Ys-axis is the left-right direction of the sensor 4a, and the Zs-axis is the up-down direction of the sensor 4a. In FIG. 8, α is a rotation angle about the front-rear direction of the sensor 4a , that is, the roll angle (an example of the installation angle) of the sensor 4a. β is a rotation angle about the left-right direction of the sensor 4a, that is, the pitch angle (an example of the installation angle) of the sensor 4a. γ is a rotation angle about the up-down direction of the sensor 4a , that is, the yaw angle (an example of the installation angle) of the sensor 4a. The angles α, β, and γ are part of the installation angle information of the sensor 4a acquired in step S11.

The projection plane is the XY plane in the robot coordinate system. A conversion matrix H for projecting the current measurement value of the sensor 4a onto the projection plane is represented by Equation 1 as shown below:
[Equation 1] $H = T \left(dx, dy\right) ⋅ Rz \left(γ\right) ⋅ Ry \left(β\right) ⋅ Rx \left(α\right)$ (1) where $Rx \left(α\right) = \left(\begin{matrix}1 & 0 & 0 & 0 \\ 0 & cos α & - sin α & 0 \\ 0 & sin α & cos α & 0 \\ 0 & 0 & 0 & 1\end{matrix}\right)$ $Ry \left(β\right) = \left(\begin{matrix}cos β & 0 & sin β & 0 \\ 0 & 1 & 0 & 0 \\ - sin β & 0 & cos β & 0 \\ 0 & 0 & 0 & 1\end{matrix}\right)$ $Rz \left(γ\right) = \left(\begin{matrix}cos γ & - sin γ & 0 & 0 \\ sin γ & cos γ & 0 & 0 \\ 0 & 0 & 1 & 0 \\ 0 & 0 & 0 & 1\end{matrix}\right)$ $T \left(dx, dy\right) = \left(\begin{matrix}1 & 0 & 0 & dx \\ 0 & 1 & 0 & dy \\ 0 & 0 & 1 & 0 \\ 0 & 0 & 0 & 1\end{matrix}\right)$

Further, let v(Ca, θa) be a three-dimensional representation of the current measurement value (Ca, θa) of the sensor 4a (where Ca is the distance to the object and θa is the irradiation angle), and let v*(Ca, θa) be a three-dimensional representation of the current measurement value after conversion. A conversion equation for projecting v(Ca, θa) onto the projection plane to obtain v*(Ca, θa) is represented by Equation 2 as shown below which uses the conversion matrix H shown in Equation 1:
[Equation 2] $v ∗ \left(Ca, θa\right) = \left(\begin{matrix}xr \\ yr \\ zr \\ 1\end{matrix}\right) = H ⋅ v \left(Ca, θa\right) = H ⋅ \left(\begin{matrix}Ca cos θa \\ Ca sin θa \\ 0 \\ 1\end{matrix}\right)$ (2)

The xr and yr in Equation are the X-coordinate and the Y-coordinate, respectively, of a projection point corresponding to the current primary measurement value projected onto the projection plane parallel to the robot installation surface A1 of the robot 2. Since the conversion Equation for projecting the current primary measurement value of the sensor 4a onto the projection plane is the same for the sensor 4b, a description of the conversion formula regarding the sensor 4b is omitted.

Returning to the description of FIG. 6. In step S16, the processor 31 acquires from the robot 2 each of the axial angles and executes a forward kinematics calculation using each the acquired axial angles, the link parameters, and the robot profile information indicating the robot arm shape. Then, the processor 31 analytically calculates the positions of the parts (each joint axis, the tool 23, etc.) of the robot 2 and further calculates a current arm position in the robot coordinate system of the robot 2. The current arm position is represented by a coordinate indicating an operation reference point of the tool 23, which is called a tool center point (TCP). Also, the current arm position may not necessarily be represented by one point and may also be represented by the position of each joint axis in addition to the TCP position.

Next, the processor 31 projects the calculated current arm position of the robot 2 onto the projection plane. Then, the processor 31 checks whether or not a distance between the projection point of the current primary measurement value projected onto the projection plane in step S15 and the projection point corresponding to the current arm position calculated in step S16 is equal to or less than a threshold value (step S17).

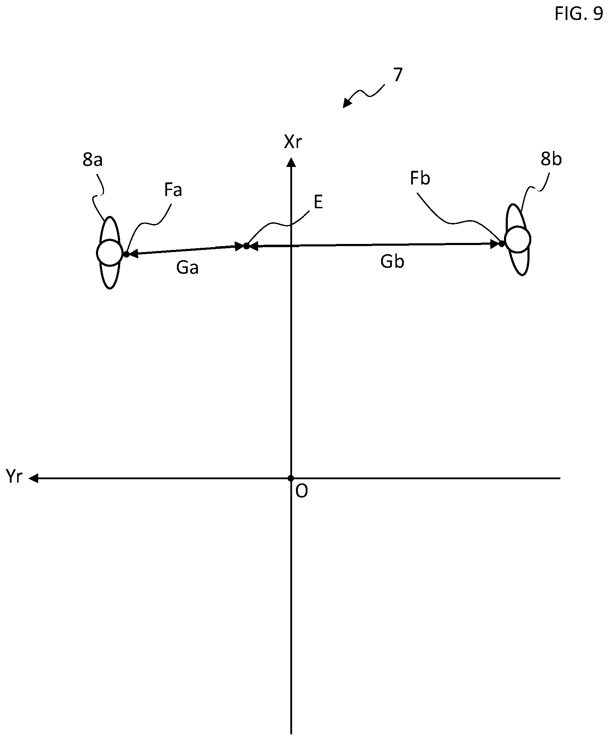

FIG. 9 is a schematic view explaining the process of step S17 shown in FIG. 6. The processor 31 defines a projection plane parallel to the robot installation surface A1 for recognizing a spatial relationship between an object and the arm 22. The projection plane 7 shown in FIG. 9 is a two-dimensional plane in the robot coordinate system. Point E is a projection point corresponding to the current arm position calculated in step S16, that is, the foot of a perpendicular line dropped from the current arm position to the projection plane 7. Points Fa and Fb are projection points of the current primary measurement value projected onto the projection plane in step S15.

Then, the processor 31 calculates distances Ga and Gb between the projection points Fa and Fb of the current primary measurement values of the sensors 4a and 4b and the point E corresponding to the current arm position, and determines whether or not the distances are equal to or less than a threshold value. In the example of FIG. 9, the positions of persons 8a and 8b are both within a movable range of the tool 23 of the robot 2. Since the person 8a is close to the arm position, it is necessary to restrict the operation of the robot 2. On the other hand, Since the person 8b is distant from the arm position, there is no need to restrict the operation of the robot 2. That is, the threshold value in step S17 represents a distance used to determine whether or not either of the person 8a or 8b is approaching close enough to the robot 2. If either of the person 8a or 8b is found within the distance from the robot 2, the operation of the robot 2 needs to be restricted.

In the example of FIG. 9, the processor 31 projects the current arm position calculated in step S16 as a point onto the projection plane 7. In the present embodiment, the current arm position is represented by a point. However, the current arm position may instead be projected onto the projection plane 7 using a two-dimensional geometric shape, such as a line, a circle, an ellipse, or a polygon. For example, the processor 31 may orthogonally project, onto the projection plane 7, line segments connecting the TCP and the respective joint positions. Alternatively, the processor 31 may orthogonally project, onto the projection plane 7, a three-dimensional geometric shape such as a rectangular parallelepiped shape representing the shapes of the arm 22 or the like.

In other words, the processor 31 calculates a current arm position of the robot 2, projects a geometric shape representative of the calculated current arm position onto the projection plane, and determines if a distance in the projection plane between the point projected on the projection plane and the geometric shape projected on the projection plane is equal to or less than a threshold value. For example, the processor 31 uses the shortest Euclidean distance between the point and the geometric shape in a two-dimensional space for the determination.

Returning to FIG. 6. In response to a determination that the calculated distance is equal to or less than the threshold value, the processor 31 controls the robot 2 to restrict the operation of the robot 2. If the distance between the point representative of the current measurement value and the geometric shape representative of the current arm position is equal to or less than the threshold value ('Yes' in step S17), the processor 31 sends a command to restrict the operation of the robot 2 (step S18) and proceeds to step S12. The command to restrict the operation of the robot 2 includes stopping the operation of the robot 2, reducing the speed of the robot 2, or moving the robot 2 in a direction away from the object. On the other hand, if the distance between the point representative of the current measurement value and the geometric shape representative of the current arm position is greater than the threshold value ('No' in step S17), the processor 31 proceeds to step S19.

The processor 31 lifts restrictions on the operation of the robot 2 in response to a determination that, for the entire monitoring range, there is no change between the current sensed circumstance and the sensed initial circumstance, or a determination that the distance in the projection plane between the point projected on the projection plane and the geometric shape projected on the projection plane becomes greater than the threshold value. In step S19, the processor 31 checks whether or not the process from step S12 to step S18 has been performed for the respective irradiation angles. If the process has not been completed for the respective irradiation angles ('No' in step S19), the processor 31 sets a next irradiation angle (step S20), and repeats the process from step S12 to step S18. On the other hand, if the process has been completed for the respective irradiation angles ('Yes' in step S19), the processor 31 sends the robot 2 a command to lift restrictions on the operation to the robot 2 (step S21) and proceeds to step S12. That is, the processor 31 lifts the restrictions on the operation of the robot 2 when there is no change between the current primary measurement value and the primary outset measurement value, or when the distance between the point representative of the current measurement value and the geometric shape representative of the current arm position is greater than the threshold value for the respective irradiation angles of the sensors 4a and 4b. In this way, the controller 3 can automatically restart the operation of the robot 2 when the object and the robot 2 move away from each other.

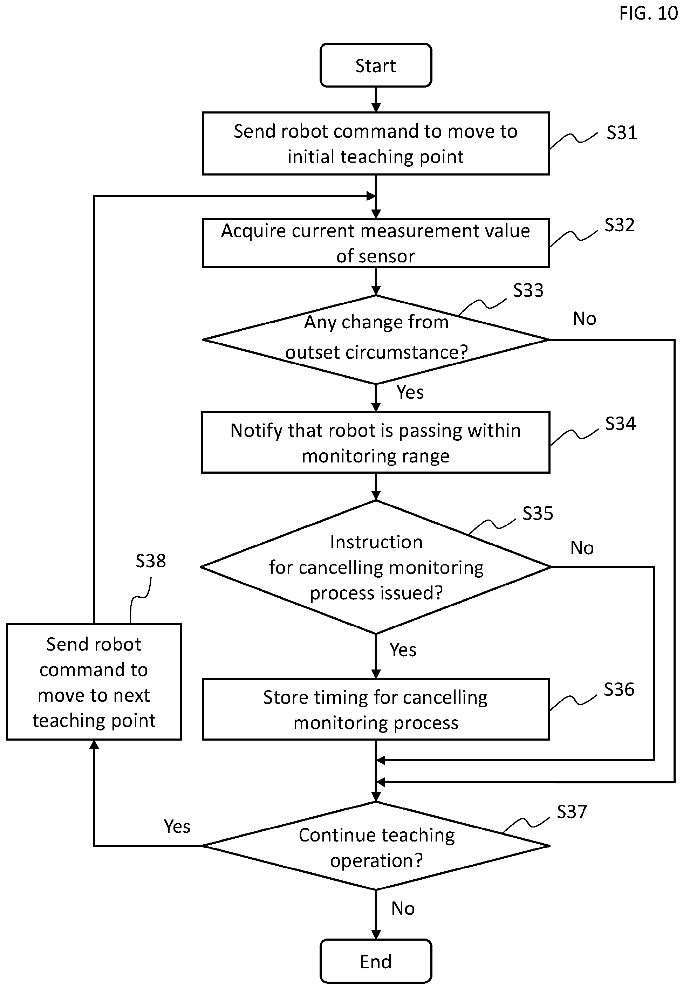

FIG. 10 is a flowchart showing an exemplary teaching process executed by the controller in FIG. 1. If the robot 2 moves to a position that blocks the laser beam of the sensor 4a or 4b during the monitoring process in FIG. 6, the controller 3 restricts the operation of the robot 2, so that the robot 2 becomes unable to perform requested movements. Thus, in the teaching process shown in FIG. 10, if the user teaches the robot 2 to move to a position that blocks the laser beam of the sensor 4a (or 4b), the controller 3 receives, via the operating device 6, an inquiry as to whether or not to cancel the monitoring process of FIG. 6. That is, the processor 31 determines whether or not there is a change between the sensed current circumstance obtained during a teaching process of the robot 2 and the sensed initial circumstance of the robot 2. Then, in response to a determination that there is a change between them, the processor 31 notifies the operating device 6 that the robot 2 is passing through the monitoring range 45a (or 45b) at the timing at which the change takes place between the sensed current circumstance and the sensed initial circumstance of the robot 2, and waits to receive a request as to whether or not to cancel the monitoring process at the timing of the change.

As shown in FIG. 10, according to an instruction from the operating device 6, the processor 31 of the controller 3 sends to the robot 2 a command to move to an initial teaching point (step S31). Next, the processor 31 acquires the current primary measurement value of the sensor 4a (or 4b) (step S32), and checks whether or not the sensed initial circumstance has changed (step S33). Specifically, similarly to the process of step S13 in FIG. 6, the processor 31 determines whether or not there is a change between the current primary measurement value of the sensor 4a (or 4b) and the primary outset measurement value measured at the same irradiation angle. The processor 31 executes the processes of step S32 and S33 for the respective irradiation angles. Then, if there is a change between the current primary measurement value and the primary outset measurement value measured at any of the irradiation angles ('Yes' in step S33), the processor 31 proceeds to step S34. If there is no change measured at the respective irradiation angles ('No' in step S33), the processor 31 proceeds to step S37.

In step S34, the processor 31 notifies the operating device 6 that the robot 2 passes within the monitoring range 45a (or 45b). On the other hand, the processor 61 of the operating device 6 displays on the touch screen 64 that the robot 2 passes within the monitoring range 45a (or 45b). Then, the processor 61 receives via the touch screen 64 an instruction from the user as to whether or not to cancel the monitoring process at this timing.

The processor 31 checks whether or not the instruction to cancel the monitoring process is issued (step S35). If the instruction to cancel is issued ('Yes' in step S35), the processor 31 stores a timing of cancelling the monitoring process (step S36) and proceeds to step S37. For example, the processor 31 stores in the storage 33, as the timing to cancel the monitoring process, a transition of the movement from the previous teaching point through the current teaching point. If no instruction to cancel is issued ('No' in step S35), the controller 3, performing no actions, proceeds to step S37. Alternatively, before proceeding to step S37, the controller 3 may receive an instruction to reset the current teaching point and repeat the process from step S32.

In step S37, the processor 31 checks whether or not to continue the teaching operation. If the teaching operation needs to continue ('Yes' in step S37), the processor 31 sends the robot 2 a command to move to a next teaching point according to the instruction from the operating device 6 (step S38) and repeats the process from step S32. On the other hand, if the teaching operation does not need to continue ('No' in step S37), the processor 31 terminates the process.

If the controller 3 receives a timing to cancel the monitoring process in the teaching process in FIG. 10, while moving the robot 2 according to the taught movements, the controller 3 does not perform the monitoring process at the receipt of the cancellation command. At the receipt of the cancellation command, the controller 3 may, for example, issue a warning sound indicating that cancellation is in progress, or may restrict the moving speed of the robot 2.

Although in the process shown in FIG. 10, the controller 3 notifies at each teach point that the robot 2 is passing within the monitoring range 45a (or 45b), the controller 3 may notify a timing of the robot 2 to pass within the monitoring range 45a (or 45b) after all of the teaching points are set. For example, when the instruction is received from the operating device 6 to play back all of the taught movements, the controller 3 executes step S32 and step S33 in FIG. 10 at a regular time interval and stores the timing at which the robot 2 passes within the monitoring range 45a (or 45b). Then, after the playback of all of the taught movements is completed, the controller 3 sends the operating device 6 a timing for the robot 2 to pass within the monitoring range 45a (or 45b). The operating device 6 shows to the user the timing for the robot 2 to pass within the monitoring range 45a (or 45b), and waits to receive a timing to cancel the monitoring process or an instruction to reset the teaching points.

As described above, the robot system 1 according to the embodiment of the present invention includes: a robot 2 having a robot arm 22 and installed on a robot installation surface A1; a controller 3 that controls the operation of the robot 2; and sensors 4a and 4b that measure distances to objects with the periphery of the robot 2 as a monitoring range. The sensors 4a and 4b are installed to have an installation angle non-parallel to the robot installation surface A1. The controller 3 executes a monitoring process including the following steps (1) to (3): (1) the controller 3 acquires installation angle information indicating the installation angle and current measurement values of the sensors 4a and 4b, and projects a projection point corresponding to the current measurement values onto a projection plane 7 parallel to the robot installation surface A1 using the installation angle information; (2) the controller 3 calculates a current arm position of the robot 2 and projects a projection shape corresponding to the current arm position onto the projection plane 7; and (3) the controller 3 determines whether or not a distance between the projection point corresponding to the current measurement values and the projection shape corresponding to the current arm position is equal to or less than a threshold value, and if it is equal to or less than the threshold value, restricts the operation of the robot 2. Accordingly, the robot system 1 can efficiently avoid contact between a person and the robot 2 without performing complicated preliminary preparation when changing the operation of the robot 2, and can flexibly respond to constraints of the installation environment. In particular, even when a person enters the movable range of the robot 2, the robot system 1 does not stop the operation of the robot 2 as long as the person is away from the robot 2, thereby preventing a decrease in the operating rate of the robot 2.

Also, the controller 3 stores in advance the outset measurement values of the sensors 4a and 4b measured at the outset before starting control of the operation of the robot 2. Then, the controller 3 determines during the monitoring process whether or not there is a change between the current measurement value and the outset measurement value. If there is a change between them, the controller 3 determines whether or not the distance between the point representative of the current measurement value and the geometric shape representative of the current arm position is equal to or less than the threshold value. If the distance is determined equal to or less than the threshold value, the controller 3 restricts the operation of the robot 2. Although the outset-circumstance storing process for storing in advance the outset measurement value needs to be performed every time the environment surrounding the robot 2 is changed, since the outset-circumstance storing process is automatically performed by the controller 3, complicated preparations by the user can be eliminated, and the burden on the user can be reduced.

Also, if it is determined during the monitoring process that there is no change between the current measurement value and the outset measurement value in the monitoring range 45a (or 45b) or if the distance between the point representative of the current measurement value and the geometric shape representative of the current arm position is greater than the threshold value, the controller 3 lifts restrictions on the operation of the robot 2. With this process, even after the operation of the robot 2 is restricted, the controller 3 can automatically restart the operation of the robot 2 when the human moves sufficiently distant from the robot 2.

Also, the robot system 1 further includes the operating device 6, which is operated by the user to control the robot 2. The controller 3 determines during the teaching process whether or not there is a change between the current primary measurement value and the primary outset measurement value. If there is a change between them, the controller 3 then notifies the operating device 6 that the robot 2 passes within the monitoring ranges 45a (or 45b) of the laser beam of the sensor 4a (or 4b) and receives an instruction as to whether or not to cancel the monitoring process. With this process, even if the user teaches the robot 2 to move to a position at which the laser light of the sensor 4a (or 4b) is blocked, the user can cancel the monitoring process, thereby increasing the degree of freedom in the taught content for the robot 2.

Note that the controller 3 may also use other types of external force detection process or may use, in addition to the detection process described above, an approach/contact monitoring process using other non-contact sensors or the like. With this configuration, even if a single detection process has a blind area where a view of an object is blocked, a collection of multiple detection processes can eliminate blind areas by one another among the detection processes.

Although the preferred embodiments of the robot system and the like according to the present invention have been described above with reference to the accompanying drawings, the present invention is not limited to these examples. It is obvious for those skilled in the art that various modification examples or correction examples may be conceived of within the range of the technical idea disclosed in the present application, and it is understood that they will also naturally fall within the technical scope of the present invention.

## Claims

1. A robot system comprising:
a robot having a robot arm and installed on a robot installation surface;
a sensor operable to sense a monitoring range extending in a specific plane extensive at an installation angle that is non-parallel to the robot installation surface, wherein the sensor is operable to measure a distance to an object that is present in the monitoring range; and
a controller comprising at least one processor and at least one memory and programmed to control operation of the robot, wherein the at least one processor is programmed to implement:
(a) defining a projection plane parallel to the robot installation surface for recognizing a spatial relationship between the object and the robot arm,
(b) subsequent to starting the operation of the robot, recursively performing a monitoring process, wherein the monitoring process comprises:
(b-1.1) operating the sensor to sense the monitoring range at intervals to recursively update a sensed circumstance surrounding the robot, wherein a current update of the sensed circumstance includes the object present in the monitoring range;
(b-2.1) projecting a point representative of the object included in the current update of the sensed circumstance onto the projection plane, using installation angle information indicating the installation angle;
(b-2.2) calculating a current arm position of the robot and projecting a geometric shape representative of the calculated current arm position onto the projection plane;
(b-2.3) determining if a distance in the projection plane between the point projected on the projection plane and the geometric shape projected on the projection plane is equal to or less than a threshold value; and
(b-2.4) in response to a determination that the determined distance is equal to or less than the threshold value, controlling the robot to restrict the operation of the robot.

2. The robot system according to claim 1,
wherein the at least one processor is further programmed to implement:
(c) operating the sensor to sense the monitoring range prior to the operation of the robot to derive an outset of the sensed circumstance surrounding the robot,
wherein the monitoring process further comprises:
(b-1.2) determining whether or not there is a change between the current update of the sensed circumstance and the outset of the sensed circumstance; and
wherein the at least one processor is further programmed to, in response to a determination that there is a change between the current update of the sensed circumstance and the outset of the sensed circumstance, perform the processes (b-2.1) to (b-2.3).

3. The robot system according to claim 2, wherein
the at least one processor is further programmed to lift a restriction on the operation of the robot in response to a determination that, for the entire monitoring range, there is no change between the current update of the sensed circumstance and the outset of the sensed circumstance or a determination that the distance in the projection plane between the point projected on the projection plane and the geometric shape projected on the projection plane is greater than the threshold value.

4. The robot system according to claim 2, the robot system further comprising:
an operating device operable by a user to control movements of the robot, wherein the at least one processor is further programmed to determine whether or not there is a change between the current update of the sensed circumstance and the outset of the sensed circumstance obtained during a teaching process of the robot, and, in response to a determination that there is a change between them, notifying the operating device that the robot is passing through the monitoring range at a timing of the change, and waiting to receive a request as to whether or not to cancel the monitoring process at the timing of the change.
